# EUROPEAN PATENT SPECIFICATION

(11) **EP 0 393 885 B1**
(45) Date of publication and mention of the grant of the patent: **28.12.1994**
(21) Application number: 90303680.4
(22) Date of filing: 05.04.1990
(51) Int. Cl.: G11B 7/09, G11B 7/135

(54) **Optical recording and reproducing apparatus**
Optisches Aufzeichnungs- und Wiedergabegerät
Appareil d'enregistrement et de reproduction optique

(30) Priority: 17.04.1989 JP 95197/89
(43) Date of publication of application: 24.10.1990
(73) Proprietor: MITSUBISHI DENKI KABUSHIKI KAISHA, Tokyo (JP)
(72) Inventor: Tadokoro, Michihiro, Itami Seisakusho, Mitsubishi, Amagasaki City, Hyogo Prefecture (JP)
(74) Representative: Mounteney, Simon James

(56) References cited:
- EP-A- 0 295 572
- US-A- 4 712 887
- PATENT ABSTRACTS OF JAPAN vol. 11, no. 305 (P-623)(2752) 06 October 1987,& JP-A-62 95743 (HITACHI LTD) 02 May 1987,
- PATENT ABSTRACTS OF JAPAN vol. 11, no. 29 (P-540)(2476) 28 January 1987,

## Description

### BACKGROUND OF THE INVENTION

### FIELD OF THE INVENTION

This invention relates to an optical recording and reproducing apparatus, and in particular, to an optical recording and reproducing apparatus using a separate-type optical head which is divided into a stationary optical system and a movable optical system.

### DESCRIPTION OF THE RELATED ART

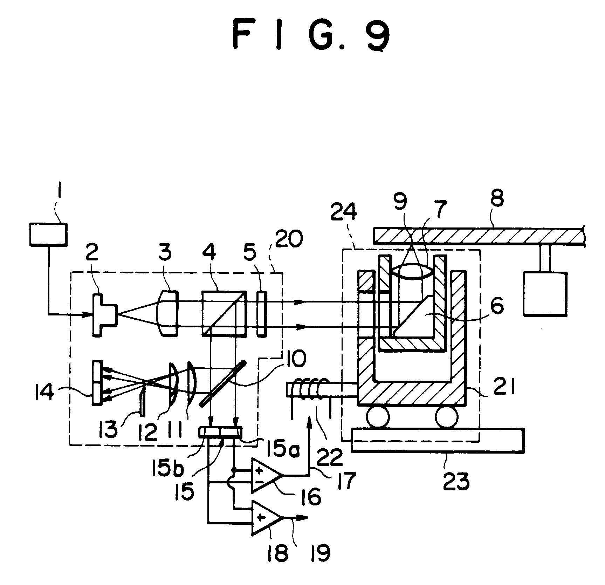

Fig. 9 shows a conventional optical recording and reproducing apparatus which is disclosed in Japanese Laid-Open Patent No. 62-95743. The apparatus shown comprises a stationary optical system 20 and a movable optical system 24. The stationary optical system 20 includes a semiconductor laser 2, a polarizing beam splitter 4, a quarter-wavelength plate 5, a half mirror 10, a convex lens 11, a cylindrical lens 12, a knife edge 13, and split-beam detectors 14 and 15. The movable optical system 24 includes a lens carriage 21 on which a launching mirror 6 and an objective lens 7 are mounted, an electromagnetic driving means 22, and a rail 23, the lens carriage 21 being moved along the rail 23 by the electromagnetic driving means 22.

Next, the operation of this conventional optical recording and reproducing apparatus will be described. First, the semiconductor laser 2 is driven by means of a laser-drive power source 1. The semiconductor laser 2 then emits a laser beam, which is converted to a parallel beam by a collimating lens 3. The parallel beam is then transmitted as P-polarized light through the polarizing beam splitter 4, the quarter-wavelength plate 5, and the launching mirror 6 before it reaches the objective lens 7. The beam is then condensed on a disk 8 as a concentration spot 9 having a diameter of about 1µm. The beam is then reflected by the disk 8 and is transmitted through the objective lens 7 to become a parallel beam. This parallel beam is reflected by the launching mirror 6 before being transmitted through the quarter-wavelength plate 5. As a result of being transmitted both ways through the quarter-wavelength plate 5, the beam is rotated to S-polarized light and impinges upon the polarizing beam splitter 4, where it is reflected and led to the half mirror 10. The half mirror 10 divides the beam into two different beams. One of the beams is reflected by the half mirror 10 and is led to a focal-deviation detecting means which is composed of the convex lens 11, the cylindrical lens 12, the knife edge 13, and the split-beam detector 14. Since the principle of this focal-deviation detecting means is not directly related to this invention, a detailed explanation of it will be omitted here. It should be added, however, that this focal deviation detecting means may be based on some well-known focus detecting method such as the knife-edge method, image rotation method, Foucault's method, or astigmatism method.

The output of this split-beam detector 14 is converted to a focal-deviation signal by a calculation circuit (not shown). An actuator (not shown) moves the objective lens 7 in the direction of the optical axis, controlling the condensation spot 9 in such a manner that it is constantly kept in focus on the disk 8.

The other beam, which is transmitted through the half mirror 10, is received by the split-beam detector 15, causing a differential circuit 16 to output a track-deviation signal 17. This signal is supplied to the electromagnetic driving means 22, which employs, for example, a well-known voice coil. The electromagnetic driving means 22 then moves the lens carriage 21 along the rail 23 in the radial direction of the disk 8, thereby effecting tracking control. The tracking control may be performed by moving the objective lens 7 in the radial direction of the disk 8 by means of an actuator (not shown).

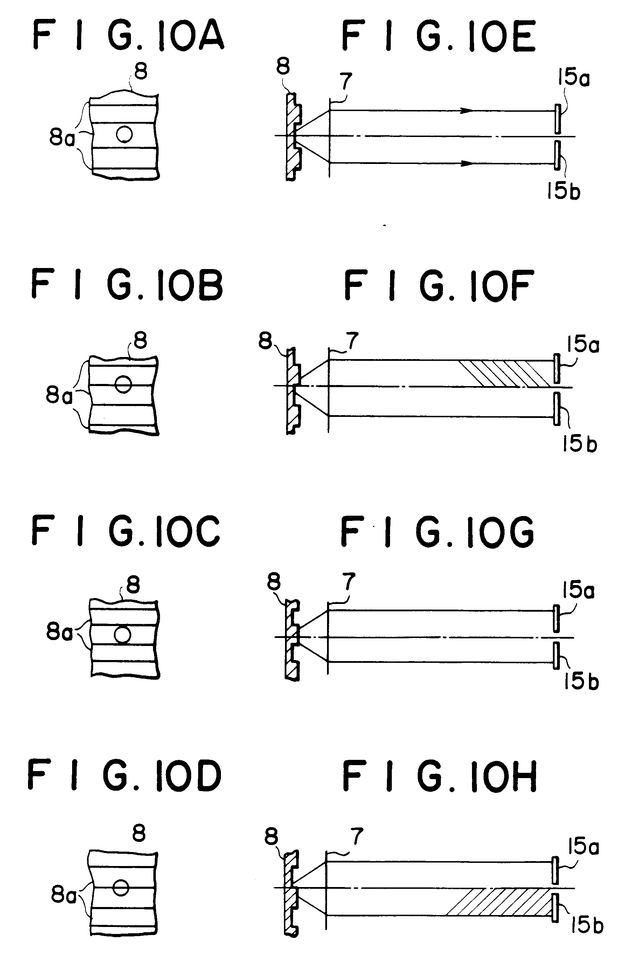

How track deviation is detected will be described in more detail. Supposing, as shown in Fig. 10A or Fig. 10C, the condensation spot 9 is positioned in the middle of a guide groove (track) 8a or in the middle of an inter-groove section, the quantity of light incident on a light receiving surface 15a is the same as that incident on a light receiving surface 15b, as shown in Fig. 10E or Fig. 10G. However, when the condensation spot 9 deviates to one side of a guide groove, as shown in Fig. 10B, the quantity of light incident on the light receiving surface 15a (indicated by the shaded portion) is less than that incident on the light receiving surface 15b because of the diffraction attributable to the guide groove 8a, as shown in Fig. 10F. When the condensation spot 9 deviates to the other side of a guide groove, as shown in Fig. 10D, the quantity of light incident on the light receiving surface 15b (indicated by the shaded portion) is less than that incident on the light receiving surface 15a, as shown in Fig. 10H. Accordingly, on the basis of any difference in output between the two light receiving surfaces 15a and 15b, it can be detected whether or not the condensation spot 9 is correctly positioned with respect to a guide groove 8a as well as to which side of the guide groove 8a it has deviated. This tracking detection method is generally called the diffraction light method or push-pull method.

However, conventional optical recording and reproducing apparatuses as described above have the following problem: when the movable optical system 24 has been displaced in the vertical direction or when the axis of movement of the rail 23 is not exactly parallel to the optical axis of the parallel beam output from the stationary optical system 20, an offset is generated in the track-deviation signal as the movable optical system 24 moves along the rail 23.

A signal offset is also easily generated if the movable optical system 24 is displaced during its movement due to any dust or the like adhering to the rail 23.

This problem will now be discussed with reference to Figs. 11, 12A, 12B, 13A and 13B. First, when in Fig. 11 the movable optical system 24 is in its initial position indicated by the dashed line, the launching mirror 6 is also in its initial position indicated by the solid line. In this state, the beam incident on the split-beam detector 15 can be indicated by the solid lines. Fig. 12A shows the manner in which beam are received by the split-beam detector. The track-deviation detecting signal 17 obtained from the split-beam detector 15 is then set by initialization in such a manner that it exhibits no offset, as shown in Fig. 13A.

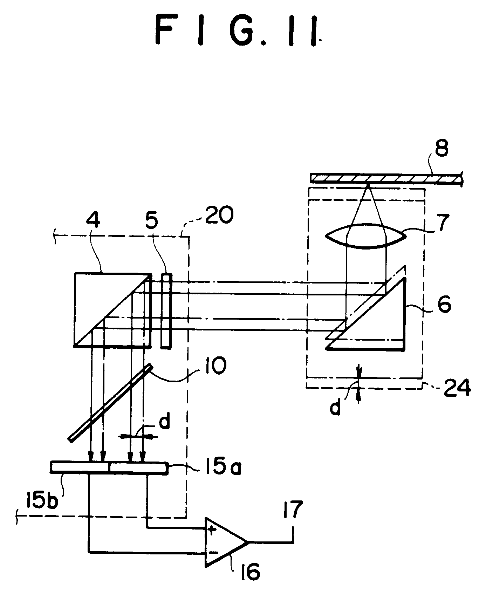

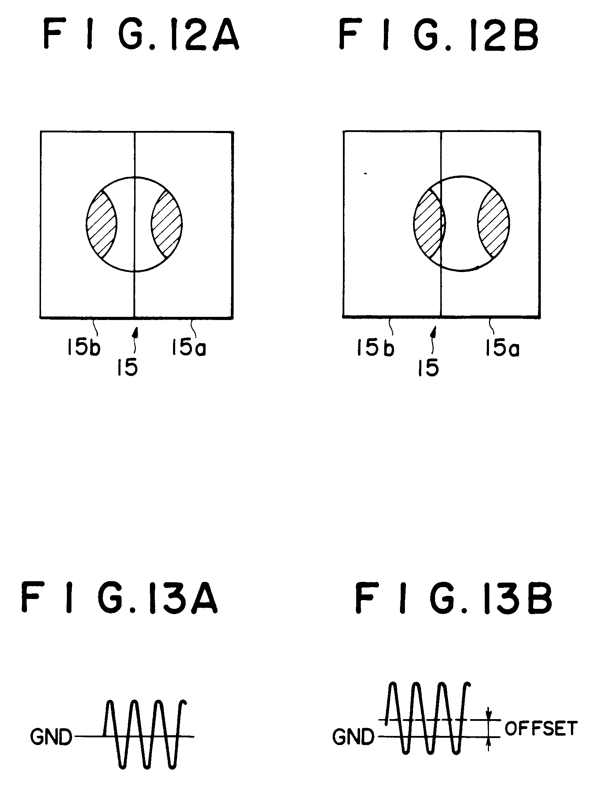

Next, suppose, in Fig. 11, the movable optical system 24 is deviated upwards by a distance d, as indicated by the chain line, while moving along the rail 23. The launching mirror 6 is then also displaced upwards. As a result, the beam reflected by the disk 8 and led to the split-beam detector 15 deviates by the distance d. Fig. 12B shows how the beam is received by the split-beam detector 15 in this condition. Thus, an offset is generated in the track-deviation detection signal 17 as compared to the initial condition, as shown in Fig. 13B.

A similar offset is generated in the track-deviation detection signal 17 obtained from the split-light detector 15 when the movable optical system 24 is tipped. In that case, the beam reflected by the disk 8 and led to the split-beam detector 15 suffers a sideward deviation.

When an offset is thus generated in the track-deviation detection signal 17, the condensation spot 9 on the disk 8 cannot properly follow the guide grooves 8a, resulting in deterioration in the apparatus properties concerned with the recording, reproducing or erasing of information.

### SUMMARY OF THE INVENTION

This invention has been made with a view towards eliminating the above problem. It is accordingly an object of this invention to provide an optical recording and reproducing apparatus which does not allow an offset to be generated in the track-deviation detection signal even if its movable optical system suffers an optical-axis deviation (a vertical deviation), thereby making it possible to effect a stable and accurate tracking control.

In accordance with this invention, there is provided an optical recording and reproducing apparatus for optically recording and reproducing information on and from a disk, comprising: a light source means for generating a parallel beam; a movable optical system adapted to condense the parallel beam from the light source means on a disk, to split the beam reflected by the disk into a first and a second beam, to spatially invert the second beam, and to move in the radial direction of the disk; a first split-beam detecting means having two light receiving surfaces which respectively receive the first beam; a second split-beam detecting means having two light receiving surfaces which respectively receive the second beam inverted in the movable optical system; and a control means adapted to effect tracking control by moving the movable optical system in the radial direction of the disk in accordance with respective detection signals output from the first and second split-beam detecting means.

### BRIEF DESCRIPTION OF THE DRAWINGS

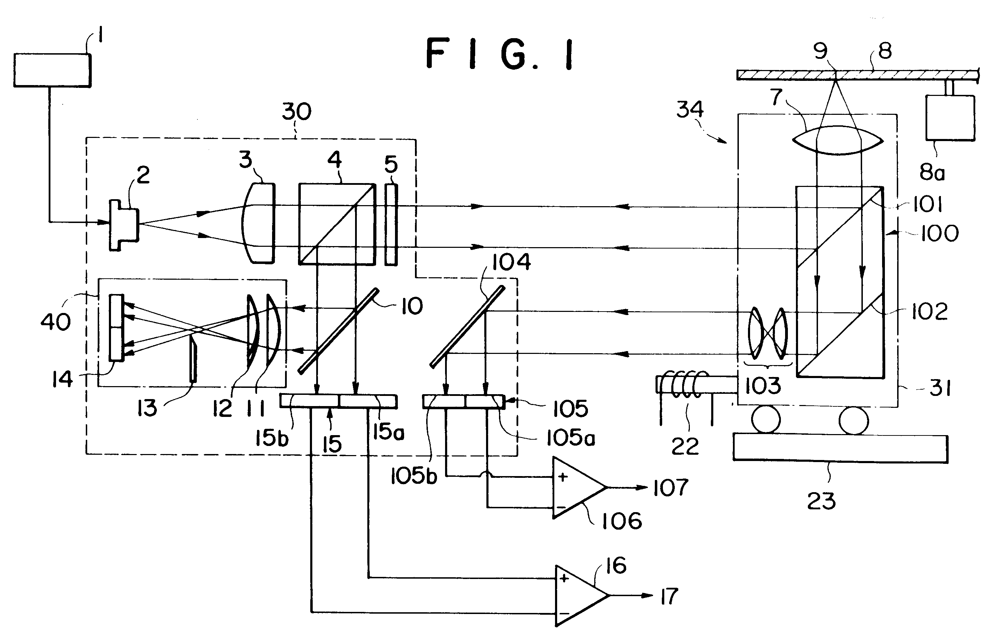

Fig. 1 is an optical-layout drawing showing an optical recording and reproducing apparatus in accordance with a first embodiment of this invention;

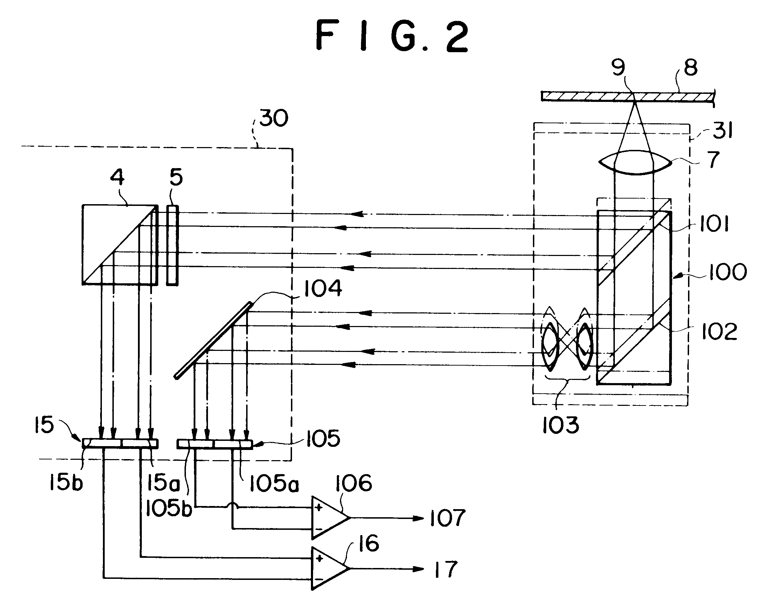

Fig. 2 is an optical-path diagram illustrating the operation of the first embodiment;

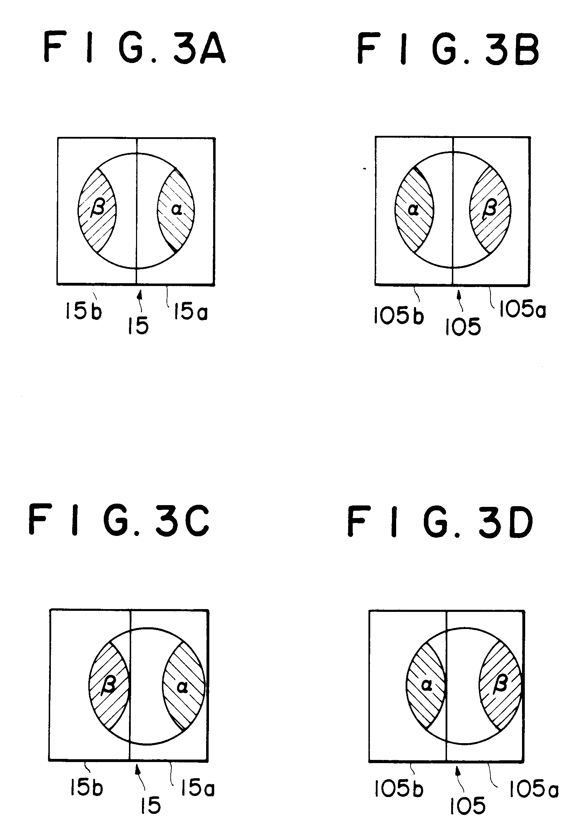

Figs. 3A to 3D are diagrams showing the manner in which beams are received by the beam detectors of the first embodiment;

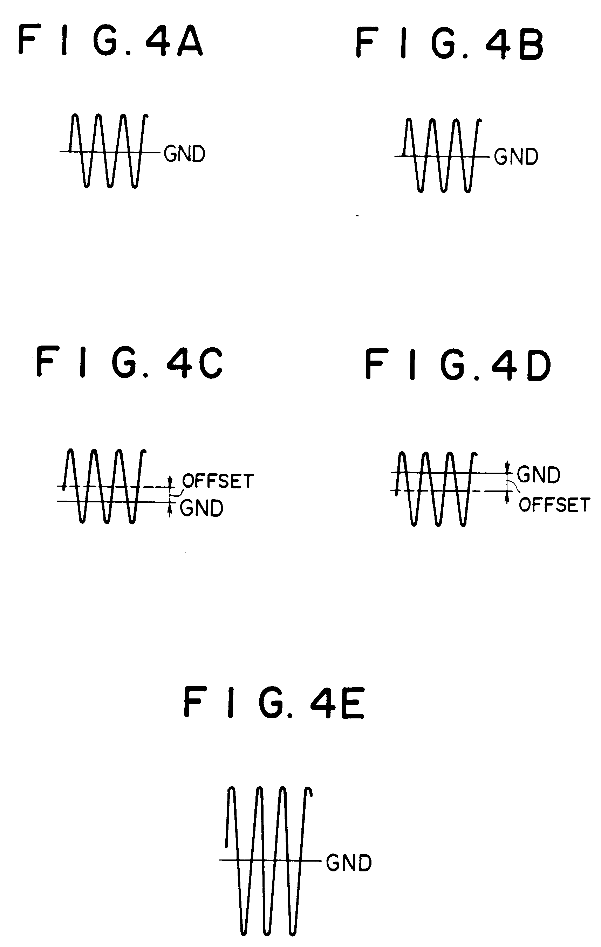

Figs. 4A to 4E are waveform diagrams showing the track-deviation detection signal in the first embodiment;

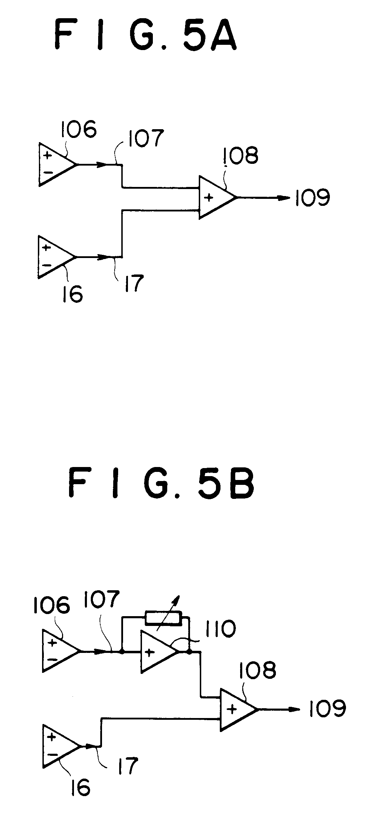

Figs. 5A and 5B are circuit diagrams showing the calculating section of the first embodiment;

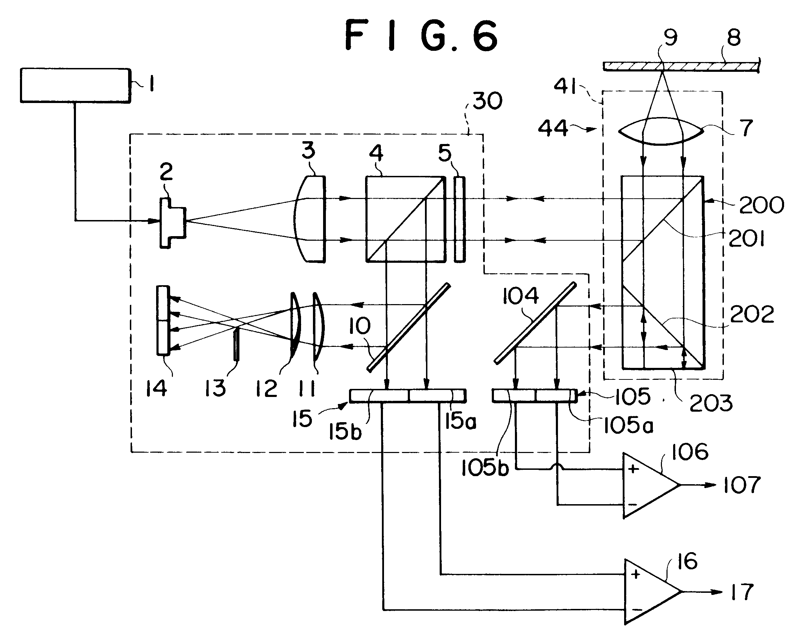

Fig. 6 is an optical-layout drawing showing a second embodiment of this invention;

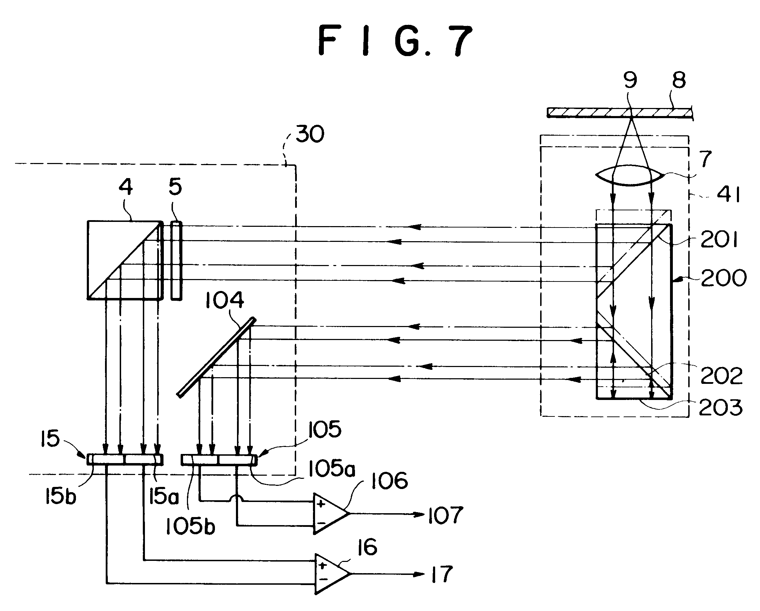

Fig. 7 is an optical-path diagram illustrating the operation of the second embodiment;

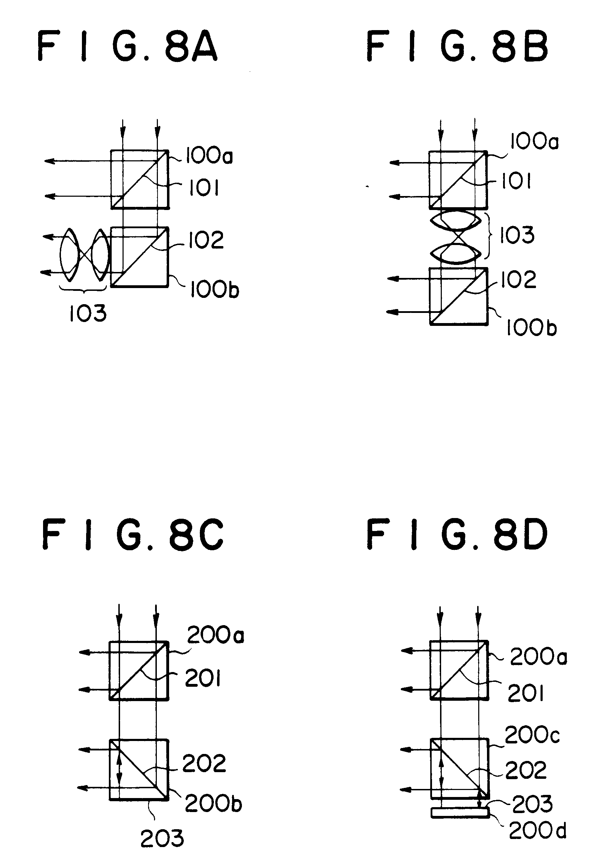

Figs. 8A to 8D are diagrams showing essential parts of other embodiments of this invention;
Fig. 9 is an optical-layout drawing showing a conventional optical recording and reproducing apparatus;
Figs. 10A to 10D are optical-path diagrams showing the positional relationship between disk tracks and the condensation spot;
Figs. 10E to 10H are optical path diagrams respectively corresponding to Figs. 10A to 10D;
Fig. 11 is an optical path diagram illustrating the problem in the apparatus of Fig. 9;
Figs. 12A and 12B are diagrams showing how beams are received by the beam detectors of the apparatus shown in Fig. 9; and
Figs. 13A and 13B are waveform diagrams showing the track-deviation detecting signal in the apparatus shown in Fig. 9.

### DESCRIPTION OF THE PREFERRED EMBODIMENTS

Embodiments of this invention will now be described with reference to the accompanying drawings.

In the embodiment shown in Fig. 1, a semiconductor laser 2 is connected to a laser drive power source 1 in a stationary optical system 30. Arranged ahead of the semiconductor laser 2 are a collimating lens 3, a polarizing beam splitter 4, and a quarter-wavelength plate 5. Provided below the polarizing beam splitter 4 is a half mirror 10 having a beam-splitting function. A first split-beam detector 15 equipped with two light receiving surfaces 15a and 15b is arranged in the optical path of one of the beams obtained by the splitting action of the half mirror 10. A first differential circuit 16 is connected to the light receiving surfaces 15a and 15b of the first split-beam detector. Provided in the optical path of the other beam obtained by the splitting action of the half mirror 10 is a focal-deviation detecting section 40 which is composed of a convex lens 11, a cylindrical lens 12, a knife edge 13, and a third split-beam detector 14.

A movable optical system 34 is arranged ahead of the quarter-wavelength plate 5. The movable optical system 34 includes a stationary rail 23 and a carriage 31 which is moved along the stationary rail 23 and which is equipped with an objective lens 7, a composite prism 100 and an inverting optical system 103. The composite prism has a beam splitting surface 101 and a reflecting surface 102 which are substantially parallel to each other, the inverting optical system 103 being arranged in front of the reflecting surface 102. The objective lens 7 is situated above the beam splitting surface 101 of the composite prism 100 and faces a disk 8, which is held parallel to the stationary rail 23 and which is rotated by a rotating device 8a. The carriage 31 is further equipped with an electromagnetic driving device 22 for moving it along the stationary rail 23 in the radial direction of the disk 8.

A reflecting mirror 104 is arranged in the stationary optical system 30 in a position where it faces the inverting optical system 103 of the movable optical system 34. Provided in the optical path of the beam reflected by this reflecting mirror 104 is a second split-beam detector 105 equipped with two light receiving surfaces 105a and 105b, which are connected to a second differential circuit 106.

The operation of the first embodiment will now be described. First, the disk 8 is rotated by the rotating device 8a and, at the same time, the carriage 31 is moved along the rail 23, causing the objective lens 7 mounted on the carriage 31 to face the disk 8 at a desired position In this condition, electricity is supplied to the semiconductor laser 2 from the laser drive power source 1, thereby driving the semiconductor laser 2. The semiconductor laser 2 then emits a divergent beam, which is converted to a parallel beam by the collimating lens 3 and is transmitted through the polarizing beam splitter 4 as P-polarized light. The beam is then led through the quarter-wavelength plate 5 to the composite prism 100 of the movable optical system 34 and is reflected upwards by the beam splitting surface 101. It is then transmitted through the objective lens 7 so as to be condensed on the disk 8 as a condensation spot 9 having a diameter of about 1µm. Recording or reproduction of information on or from the disk 8 is effected through this condensation spot 9.

Reflected by the disk 8, the beam is transmitted through the objective lens 7 again and becomes a parallel beam, which is led to the composite prism 100. Part of this parallel beam is reflected by the beam splitting surface 101 and impinges upon the quarter wavelength plate 5 of the stationary optical system 30. As a result of having been transmitted through the quarter-wavelength plate 5 in both ways, the beam is reflected by the polarizing beam splitter 4, this time as S-polarized light, and is led to the half mirror 10. The beam which is transmitted through this half mirror 10 is received by the light receiving surfaces 15a and 15b of the first split-beam detector 15. The difference between the respective detection signals from these light receiving surfaces 15a and 15b is picked up by the first differential circuit 16 and is delivered as a first track-deviation detection signal 17.

That part of the beam reflected by the disk 8 which is transmitted through the beam splitting surface 101 of the composite prism 100 is reflected by the reflecting surface 102 and is led to the inverting optical system 103. The inverting optical system 103 is composed of two focusing lenses. The beam entering this inverting optical system 103 first forms an image and is then converted to a parallel beam again before being delivered. The beam is then reflected by the reflecting mirror 104 and is led to the light receiving surfaces 105a and 105b of the second split-beam detector 105. The difference between the respective detection signals from these light receiving surfaces 105a and 105b is picked up by the second differential circuit 106 and is delivered as a second track-deviation detection signal 107.

Next to be described, with reference to Figs. 2, 3A to 3D, and 4A to 4E, will be the principle which makes it possible to obtain a track-deviation detection signal with no offset even if an optical-axis deviation is generated in the movable optical system 34.

First, suppose, in Fig. 2, the carriage 31 of the movable optical system 34 is in the normal position, which is indicated by the dashed line. The composite prism 100 and the inverting lens system 103 are then in the positions indicated by the solid lines. In this state, the beams incident on the split-beam detectors 15 and 105 follow the courses indicated by the solid lines. Figs. 3A and 3B show how the beams are received by the split-beam detectors 15 and 105. The shaded portions in Figs. 3A and 3B represent the areas where a considerable quantity of light is diffracted due to the guide grooves of the disk 8. What should be noted here is the fact that the beam incident upon the second split-beam detector 105 forms an image in the inverting-lens system 103 prior to its impingement upon the split-beam detector 105. As a result, as shown in Figs. 3A and 3B, the positional relationship between the areas α and β is inverted. The track-deviation detection signals 17 and 107 are obtained from these split-beam detectors 15 and 105 by means of the differential circuits 16 and 106, as shown in Fig. 2. However, to adjust the track-deviation polarity, the differential circuits 16 and 106 are respectively are designed as follows: regarding the split beam detector 15, the output of the light receiving surface 15b is subtracted from the output of the light receiving surface 15a, and, regarding the split-beam detector 105, the output of the light receiving surface 105a is subtracted from the output of the light receiving surface 105b. Figs. 4A and 4B respectively show the track-deviation detection signals 17 and 107. In the normal state, the split-beam detectors 15 and 105 are so initialized that they have no offset, as shown in Figs. 4A and 4B.

Next, suppose, in Fig. 2, the carriage 31 has been displaced upwards as indicated by the chain line while moving along the rail (not shown). This causes the composite prism 100 and the inverting lens 103 to be also displaced upwards as indicated by the chain line. As a result, the beams reflected by the disk 8 and incident upon the split-beam detectors 15 and 105 deviate laterally in the same direction, as indicated by the chain lines. Here, the respective deviations of these beams are the same. Figs. 3C and 3D diagrammatically show how the beams are received in this state by the split-beam detectors 15 and 105.

It should be noted here that, as stated above, the beam incident on the split-beam detector 105 has been inverted on the way, so that, when the carriage 31 deviates upwards, the change in the quantity of incident light differs between the split-beam detectors 15 and 105. On the split-beam detector 15, the quantity of light on the side of the area α, i.e., the quantity of light incident on the light receiving surface 15a, increases, as shown in Fig. 3C, whereas, on the split-beam detector 105, the quantity of light on the side of the area β, i.e., the quantity of light incident on the light receiving surface 105a, increases, as shown in Fig. 3D. Thus, although offsets have been generated in the track-deviation detection signals 17 and 107, as shown in Figs. 4C and 4D, the directions of these offsets are reverse to each other.

Accordingly, in the case where the quantities of light incident on the split-beam detectors 15 and 105 are equal to each other, in other words, in the case where the output amplitudes of the track-deviation detection signals 17 and 107 are the same, it is possible to exclusively cancel the offset components of the track-deviation detection signals 17 and 107 by simply adding them together by means of an adder 108 as shown in Fig. 5A,
thereby obtaining a track-deviation detection signal 109 which includes no offset, as shown in Fig. 4E. If the quantities of light incident on the split-beam detectors 15 and 105 are not equal to each other, a similar effect can be obtained by equalizing the amplitudes of the detection signals 17 and 107 by means of a gain-adjusting amplifier 110, as shown in Fig. 5B, and adding them together by means of the adder 108. Whether the amplitudes of the track-deviation detection signals 17 and 107 are equal to each other is determined by the properties of the optical components used in the stationary optical system 30 and the movable optical system 34. Thus, the amplitudes of the detection signals 17 and 107 can be measured before selecting between the types of circuit configuration shown in Figs. 5A and 5B.

The carriage 31 is moved along the rail 23 by the electromagnetic driving device 22, which is shown in Fig. 1, in such a manner as to cause the thus obtained track-deviation detection signal 109 with no offset to become 0, thereby effecting tracking control. The tracking control may be performed by moving the objective lens 7 in the radial direction of the disk 8 by means of an actuator (not shown).

That part of the beam which is further reflected by the half mirror 10 after being reflected by the polarizing beam splitter 4, enters the focal-deviation detecting section 40, causing the third split-beam detector 14 to output a focal-deviation detection signal. On the basis of this focal-deviation detection signal, an actuator (not shown) appropriately moves the objective lens 7 of the movable optical system 34 in the direction of the optical axis, thus making it possible to effect the condensation spot 9 in such a manner that it is constantly in focus on the disk 8.

Fig. 6 shows the optical layout of a second embodiment of this invention. The second embodiment does not differ from the first one except that it employs a movable optical system 44 which is different from the movable optical system 34 of the first embodiment. The movable optical system 44 includes a carriage 41 which is equipped with a composite prism 200 and an objective lens 7. The composite prism 200 is equipped with a first and a second beam splitting surface 201 and 202 which are substantially at right angles to each other as well as a total-reflection surface 203 arranged below the second beam splitting surface 202.

The function of the first beam splitting surface 201 of the composite prism 200 is completely identical to that of the beam splitting surface 101 of the composite prism 100. The beam splitting surface 201 reflects the parallel beam from the stationary optical system 30 and directs it to the disk 8 through the objective lens 7 and, at the same time, reflects and transmits the reflected light from the disk 8, splitting it into two different beams.

Of the reflected light from the disk 8, the beam which is transmitted through the first beam splitting surface 201 of the composite prism 200 reaches the second beam splitting surface 202. The component of this beam which is transmitted through the beam splitting surface 202 is reflected by the total-reflection surface 203 and is led to the second beam splitting surface 202 again. The beam reflected by the second beam splitting surface 202 is directed to the stationary optical system 30. Then, it is reflected by a reflecting mirror 104 and is led to the light receiving surfaces 105a and 105b of a second split beam detector 105. The beam which reaches the reflecting mirror 104 has been inverted as a result of being reflected by the total-reflection surface 203 and the second beam splitting surface 202 of the composite prism 200.

Thus, in the case where the carriage 41 has been vertically displaced from its normal position, as indicated by the chain line of Fig. 7, the first and second differential circuits 16 and 106 output track-deviation detection signals 17 and 107 which include offsets whose directions are reverse to each other. Accordingly, by using the circuit shown in Fig. 5A or Fig. 5B, a track-deviation detection signal 109 without any offset can be obtained.

While in the first embodiment a composite prism 100 is used, it is also possible, as shown in Fig. 8A, to combine a prism 100a having a beam splitting surface 101 with a prism 100b having a reflecting surface 102. In that case, the inversion optical system 103 may be arranged between the two prisms 100a and 100b, as shown in Fig. 8B

Likewise, in the second embodiment, a prism 200a having a first beam splitting surface 201 may be combined with a prism 200b having a second beam splitting surface 202 and a total-reflection surface 203, as shown in Fig. 8C, instead of using a composite prism 200. Further, as shown in Fig 8D, the prism 200b may be divided into two prisms: a prism 200c having a second beam splitting surface 202 and a prism 200d having a total-reflection surface 203.

## Claims

1. An optical recording and reproducing apparatus for optically recording and reproducing information on and from a disk (8), comprising:
a light source (2, 3) for generating a parallel beam;
a movable optical system (34) adapted to condense the parallel beam from said light source means on the disk, to receive the beam reflected by said disk, and to move in the radial direction of said disk;
a first split-beam detecting means (15) having two light-receiving surfaces (15a, 15b) which receive said reflected beam; and
a control means (16, 106) adapted to effect tracking control by moving said movable optical system in the radial direction of said disk in accordance with detection signals output from said split-beam detecting means;
characterised in that the movable optical system (34) splits the reflected beam into first and second beams, and spacially inverts the second beam;
a second split-beam detecting means (105) is provided, having two light-receiving surfaces (105a, 105b) which receive the inverted second beam, the first reflected beam being received by the first split-beam detecting means (15); and
the control means (16, 106) effects tracking control in accordance with the respective detection signals from the first and the second split-beam detecting means (15, 105).

2. An apparatus as claimed in Claim 1, wherein said movable optical system includes a stationary rail (23), a carriage (31) which is movable along said rail, an objective lens (7) which is provided on said carriage and which faces said disk, a splitting means (100; 200) which is provided on said carriage and which is adapted to direct the parallel beam from said light source means to said objective lens, to receive the reflected light from said disk through said objective lens, and to split the reflected light into a first and a second beam, and an inverting means adapted to spatially invert said second beam obtained by said splitting means.

3. An apparatus as claimed in Claim 2, wherein said splitting means includes a prism (100) which is equipped with a beam splitting surface (101) adapted to receive the reflected light from said disk.

4. An apparatus as claimed in Claim 2 or 3, wherein said inverting means includes an inverting lens (103) arranged on the optical axis of said second beam.

5. An apparatus as claimed in Claim 2, wherein said inverting means includes a prism (200) equipped with a beam splitting surface (202) to receive said second beam and a reflecting surface or mirror (203) adapted to reflect the beam transmitted through this beam splitting surface and to cause it to impinge upon said beam splitting surface (202) again.

6. An apparatus as claimed in Claim 2, wherein said splitting means and said inverting means include a prism (200) which is equipped with a first beam splitting surface (201) adapted to receive the reflected light from said disk, a second beam splitting surface (202) arranged substantially at right angles to said first beam splitting surface and adapted to receive the light reflected by said disk and transmitted through said first beam splitting surface, and a reflecting surface or mirror (203) adapted to reflect the beam transmitted through said second beam splitting surface and to cause it to impinge upon said second beam splitting surface again.

7. An apparatus as claimed in any preceding Claim, wherein said light source includes a semiconductor laser (2) and a collimating lens (3) adapted to convert a divergent beam from said semiconductor laser to a parallel beam.

8. An apparatus as claimed in any preceding Claim, wherein said control means includes a first differential circuit (16) adapted to pick up the difference between the respective detection signals from the two light receiving surfaces (15a, 15b) of said first split-beam detecting means (15), a second differential circuit (106) adapted to pick up the difference between the respective detection signals from the two light receiving surfaces (105a, 105b) of said second split-beam detecting means (105), an adder (108) adapted to add together the outputs of said first and second differential circuits, and an electromagnetic driving means (22) adapted to move said movable optical system in accordanoe with the output of said adder.

9. An apparatus as claimed in any preceding Claim, further comprising a focal-deviation detecting means (40) adapted to receive either said first beam or said second beam so as to detect any focal deviation.

## Patentansprüche

1. Optische Aufzeichnungs- und Wiedergabevorrichtung zum optischen Aufzeichnen und Wiedergeben von Information auf und von einer Platte (8), wobei die Vorrichtung aufweist:
eine Lichtquelle (2, 3) zum Erzeugen eines parallelen Strahls;
ein bewegliches optisches System (34), das ausgebildet ist, um den parallelen Strahl von der Lichtquelle auf der Platte zu sammeln, um den von der Platte reflektierten Strahl zu empfangen und sich in der Radialrichtung der Platte zu bewegen;
eine erste Detektiereinrichtung (15) für einen geteilten Strahl, die zwei Lichtempfangsflächen (15a, 15b) hat, die den reflektierten Strahl empfangen; und
eine Steuereinrichtung (16, 106), die ausgebildet ist, um die Spursteuerung durchzuführen, indem das bewegliche optische System nach Maßgabe von Detektiersignalen, die von der Detektiereinrichtung für einen geteilten Strahl abgegeben werden, in der Radialrichtung der Platte bewegt wird;
dadurch gekennzeichnet, daß das bewegliche optische System (34) den reflektierten Strahl in einen ersten und einen zweiten Strahl teilt und den zweiten Strahl räumlich umkehrt;
eine zweite Detektiereinrichtung (105) für einen geteilten Strahl vorgesehen ist, die zwei Lichtempfangsflächen (105a, 105b) hat, die den umgekehrten zweiten Strahl empfangen, wobei der erste reflektierte Strahl von der ersten Detektiereinrichtung (15) für einen geteilten Strahl empfangen wird; und
die Steuereinrichtung (16, 106) nach Maßgabe der jeweiligen Detektiersignale der ersten und der zweiten Detektiereinrichtung (15, 105) für einen geteilten Strahl die Spursteuerung durchführt.

2. Vorrichtung nach Anspruch 1, wobei das bewegliche optische System aufweist: eine ortsfeste Schiene (23), einen Wagen (31), der entlang der Schiene bewegbar ist, eine Objektivlinse (7), die auf dem Wagen vorgesehen und der Platte zugewandt ist, eine Teilereinrichtung (100; 200), die auf dem Wagen vorgesehen und ausgebildet ist, um den parallelen Strahl von der Lichtquelle auf die Objektivlinse zu richten, um das reflektierte Licht von der Platte durch die Objektivlinse zu empfangen und um das reflektierte Licht in einen ersten und einen zweiten Strahl zu teilen, sowie eine Umkehreinrichtung, die ausgebildet ist, um den von der Teilereinrichtung erhaltenen zweiten Strahl räumlich umzukehren.

3. Vorrichtung nach Anspruch 2, wobei die Teilereinrichtung ein Prisma (100) aufweist, das mit einer Strahlteilerfläche (101) versehen ist, die ausgebildet ist, um das reflektierte Licht von der Platte zu empfangen.

4. Vorrichtung nach Anspruch 2 oder 3, wobei die Umkehreinrichtung eine Umkehrlinse (103) aufweist, die auf der optischen Achse des zweiten Strahls angeordnet ist.

5. Vorrichtung nach Anspruch 2, wobei die Umkehreinrichtung ein Prisma (200) aufweist, das versehen ist mit einer Strahlteilerfläche (202), um den zweiten Strahl zu empfangen, und mit einer reflektierenden Oberfläche oder einem Spiegel (203), der ausgebildet ist, um den durch diese Strahlteilerfläche durchgelassenen Strahl zu reflektieren und ihn zu veranlassen, erneut auf die Strahlteilerfläche (202) aufzutreffen.

6. Vorrichtung nach Anspruch 2, wobei die Teilereinrichtung und die Umkehreinrichtung ein Prisma (200) aufweisen, das versehen ist mit einer ersten Strahlteilerfläche (201), die ausgebildet ist, um das reflektierte Licht von der Platte zu empfangen, mit einer zweiten Strahlteilerfläche (202), die im wesentlichen rechtwinklig zu der ersten Strahlteilerfläche angeordnet und ausgebildet ist, um das von der Platte reflektierte und durch die erste Strahlteilerfläche durchgelassene Licht zu empfangen, und mit einer reflektierenden Oberfläche oder einem Spiegel (203), der ausgebildet ist, um den durch die zweite Strahlteilerfläche durchgelassenen Strahl zu reflektieren und ihn zu veranlassen, erneut auf die zweite Strahlteilerfläche aufzutreffen.

7. Vorrichtung nach einem der vorhergehenden Ansprüche, wobei die Lichtquelle einen Halbleiterlaser (2) und eine Kollimatorlinse (3) aufweist, die ausgebildet ist, um einen divergenten Strahl von dem Halbleiterlaser in einen parallelen Strahl umzuwandeln.

8. Vorrichtung nach einem der vorhergehenden Ansprüche, wobei die Steuereinrichtung aufweist: einen ersten Differentialschaltkreis (16), der ausgebildet ist, um die Differenz zwischen den jeweiligen Detektiersignalen von den beiden Lichtempfangsflächen (15a, 15b) der ersten Detektiereinrichtung (15) für einen geteilten Strahl aufzunehmen, einen zweiten Differentialschaltkreis (106), der ausgebildet ist, um die Differenz zwischen den jeweiligen Detektiersignalen der beiden Lichtempfangsflächen (105a, 105b) der zweiten Detektiereinrichtung (105) für einen geteilten Strahl aufzunehmen, einen Addierer (108), der ausgebildet ist, um die Ausgangssignale des ersten und des zweiten Differentialschaltkreises zu addieren, und eine elektromagnetische Antriebseinrichtung (22), die ausgebildet ist, um das bewegliche optische System nach Maßgabe des Ausgangssignals des Addierers zu bewegen.

9. Vorrichtung nach einem der vorhergehenden Ansprüche, die ferner eine Brennpunktsabweichungs-Detektiereinrichtung (40) aufweist, die ausgebildet ist, um entweder den ersten Strahl oder den zweiten Strahl zu empfangen, um eine Brennpunktsabweichung zu detektieren.

## Revendications

1. Appareil optique d'enregistrement et de reproduction pour enregistrer et reproduire par voie optique des informations sur et à partir d'un disque (8), comprenant:
une source de lumière (2, 3) pour engendrer un faisceau parallèle;
un système optique mobile (34) adapté pour condenser le faisceau parallèle en provenance desdits moyens de source de lumière sur le disque, pour recevoir le faisceau réfléchi par ce disque, et pour se déplacer dans la direction radiale de ce disque;
des premier moyens de détection de faisceau divisé (15) ayant deux surfaces réceptrices de lumière (15a, 15b) qui reçoivent ledit faisceau réfléchi; et
des moyens de commande (16, 106) adaptés pour effectuer un contrôle de poursuite (8) en déplaçant ledit système optique mobile dans la direction radiale du disque en accord avec des signaux de détection produits en sortie par les moyens de détection de faisceau divisé;
caractérisé en ce que le système optique mobile (34) divise le faisceau réfléchi en un premier faisceau et un second faisceau et inverse le second faisceau dans l'espace;
des seconds moyens de détection de faisceau divisés (105) sont prévus, qui présentent deux surfaces réceptrices de lumière (105a, 105b) qui reçoivent le second faisceau inversé, le premier faisceau réfléchi étant reçu par les premiers moyens détecteurs de faisceau divisé (15); et les moyens de commande (16, 106) effectuent une commande ou un contrôle de poursuite (8) en accord avec les signaux de détection respectifs des premier et second moyens de détection de faisceau divisé (15, 105).

2. Un appareil selon la revendication 1, dans lequel le système optique mobile précité comprend un rail stationnaire (23), un chariot (31) qui est mobile le long dudit rail, une lentille d'objectif (7) qui est prévue sur ledit chariot et est en regard dudit disque, un moyen de division (100; 200) qui est prévu sur ledit chariot et est adapté pour diriger le faisceau parallèle en provenance desdits moyens de source de lumière vers ladite lentille d'objectif, pour recevoir la lumière réfléchie par ledit disque à travers ladite lentille d'objectif, et pour diviser la lumière réfléchie en un premier et un second faisceau, et des moyens d'inversion adaptés pour inverser dans l'espace le second faisceau obtenu par les moyens de division.

3. Un appareil selon la revendication 2, dans lequel les moyens de division précités comprennent un prisme (100) qui est équipé d'une surface de division de faisceau (101) adaptée pour recevoir la lumière réfléchie par le dispositif.

4. Un appareil selon l'une des revendications 2 ou 3, dans lequel les moyens inverseurs comprennent une lentille inversante (103) disposée dans l'axe optique du second faisceau.

5. Un appareil selon la revendication 2, dans lequel les moyens inverseurs précités comprennent un prisme (200) pourvu d'une surface de division de faisceau (202) pour recevoir le second faisceau précité et une surface réfléchissante pour un miroir (203) adapté pour réfléchir le faisceau transmis par l'intermédiaire de la surface de division de faisceau et pour amener celui-ci à être incident à nouveau sur ladite surface de division de faisceau (202).

6. Appareil selon la revendication 2, dans lequel les moyens diviseur et les moyens inverseurs comprennent un prisme (200) qui est pourvu d'une première surface de division de faisceau (201) adaptée pour recevoir la lumière réfléchie par le disque précité, une seconde surface de division de faisceau (202) disposée sensiblement à angle droit par rapport à ladite première surface de division de faisceau et adaptée pour recevoir la lumière réfléchie par ledit disque et transmis par l'intermédiaire de ladite première surface de division de faisceau, et une surface réfléchissante ou miroir (203) adaptée pour réfléchir le faisceau transmis à travers ladite seconde surface de division de faisceau et pour amener celui-ci à être incidente à nouveau sur ladite seconde surface de division de faisceau.

7. Appareil selon l'une des revendications précédentes, dans lequel la source de lumière précitée comprend un laser semiconducteur (2) et une lentille de collimation (3) adaptée pour convertir un faisceau divergent du laser semiconducteur en un faisceau parallèle.

8. Un appareil selon l'une des revendications précédentes, dans lequel les moyens de contrôle précités comportent un premier circuit différentiel (16) adapté pour capter la différence entre les signaux de détection respectifs en provenance des deux surfaces réceptrices de lumière (15a, 15b) du premier moyen détecteur de faisceau divisé précité (15), un second circuit différentiel (106) adapté pour capter la différence entre les signaux de détection respectifs en provenance des deux surfaces réceptrices de lumière (105a, 105b) desdits seconds moyens détecteurs de faisceau divisé (105), un additionneur (108) adapté pour additionner les sorties desdits premièr et second circuits différentiels, et des moyens d'entraînement électromagnétique (22) adaptés pour déplacer le système optique mobile précité en accord avec la sortie dudit additionneur.

9. Un appareil selon l'une des revendications précédentes, comprenant en outre un moyen détecteur de déviation focale (40) adapté pour recevoir chacun desdits premier ou second faisceaux de façon à détecter tout écart focal.
